(19) Europäisches Patentamt
European Patent Office
Office européen des brevets

(11) **EP 2 045 338 A1**

(12) **EUROPEAN PATENT APPLICATION**
published in accordance with Art. 153(4) EPC

(43) Date of publication:
**08.04.2009 Bulletin 2009/15**

(21) Application number: **07859991.7**

(22) Date of filing: **21.12.2007**

(51) Int Cl.:
*C21C 7/076* (2006.01)    *B22D 1/00* (2006.01)
*C21C 7/00* (2006.01)    *C21C 7/04* (2006.01)
*C21C 7/06* (2006.01)    *C21C 7/064* (2006.01)
*C21C 7/10* (2006.01)

(86) International application number:
**PCT/JP2007/074762**

(87) International publication number:
**WO 2008/081763 (10.07.2008 Gazette 2008/28)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **22.12.2006 JP 2006346771**

(71) Applicant: **Yoshizawa Lime Industry Co., Ltd.**
**Tokyo 103-0024 (JP)**

(72) Inventors:
• **BAN-YA, Shiro**
**Sendai-shi**
**Miyagi 982-0001 (JP)**

• **HINO, Mitsutaka**
**Sendai-shi**
**Miyagi 981-3100 (JP)**
• **ITO, Hiroyasu**
**Sano-shi**
**Tochigi 327-0509 (JP)**
• **TAKEDA, Syuhei**
**Sano-shi**
**Tochigi 327-0509 (JP)**

(74) Representative: **Rupprecht, Kay et al**
**Meissner, Bolte & Partner GbR**
**Widenmayerstrasse 48**
**80538 München (DE)**

(54) **FLUX FOR OBTAINING STEEL REDUCED IN NITROGEN, OXYGEN, AND SULFUR CONTENTS THROUGH SMELTING**

(57)    Disclosed is a steelmaking flux which makes it possible to produce steel of extremely low contents of oxygen, nitrogen and sulfur. The flux consists of, by weight, CaO: 30-57%, $Al_2O_3$: 35-64% and MgO: 5-17%, and having a composition in the area defined by the points A to E of Table 1 below in the $MgO$-$CaO$-$Al_2O_3$ diagram of Figure 1, in which the activity of alumina is $10^{-2}$ or less.

(continued)

| Point | Concentration (Molar basis, mole) | | |
|---|---|---|---|
| | $N_{CaO}$ | $N_{Al2O3}$ | $N_{MgO}$ |
| E | 0.46 | 0.45 | 0.09 |

Table 1

| Point | Concentration (Molar basis, mole) | | |
|---|---|---|---|
| | $N_{CaO}$ | $N_{Al2O3}$ | $N_{MgO}$ |
| A | 0.41 | 0.48 | 0.11 |
| B | 0.37 | 0.35 | 0.11 |
| C | 0.62 | 0.22 | 0.16 |
| D | 0.87 | 0.25 | 0.08 |

F i g . 1

**Description**

BACKGROUND OF THE INVENTION

Field in the Industry

The present invention concerns a novel flux for refining steel of low nitrogen, low oxygen and low sulfur, and a process for making the high purity steel by using this flux.

State of the Art

In the field of steel sheets used in automobile industry, there has been increasing demand for steel with reduced contents of impurities such as nitrogen, oxygen and sulfur. As is well known, denitrification or removal of nitrogen from steel is carried out by vacuum degassing, deoxidation or removal of oxygen, with aluminum or calcium metal, which are powerful deoxidizing agents, and desulfurization or removal of sulfur, by slag-metal reaction with flux of regulated compositions.

It has been proposed to use a flux of quick slag-formation and having high desulfurizing and deoxidizing performance for steelmaking. The flux consists of the main components, CaO: 40-70% (weight percent), $Al_2O_3$: 10-30% and $CaF_2$: 10-30%, and additional components, MgO: 0.5-5%, $SiO_2$: 0.5-5% and $CaF_2$: 1-5%, and the mixture is sintered before use (Japanese Patent Disclosure No.60-36610). $CaF_2$, one of the flux components, is added of course for lowering the melting point. Due to consideration on the effect to the environment, it is current tendency to avoid use of $CaF_2$, if possible, and another flux of $CaO$-$Al_2O_3$ base containing no $CaF_2$ is known as a low-melting point desulfurization flux.

One of the inventors intended to utilize dolomite as one of the materials of steelmaking flux and developed, in collaboration with the other inventors, desulfurization flux based on calcined dolomite containing CaO and MgO in a ratio of CaO/MgO=1.0-2,1, to which another CaO source is added to give a ratio of CaO/MgO=1-5 (Japanese Patent Disclosure No. 2003-268429). Addition of MgO to steelmaking fluxes has been tried for the purpose of protecting refractory materials. More specifically, fluxes of the compositions containing MgO of 5-20% have been used to prevent damaging of the refractory caused by erosion or dissolution of MgO-component out of MgO-based refractory such as magnesia-carbon bricks so that the resulting progress in damaging of the refractory may be avoided.

As the flux for denitrification there has been proposed to use a flux consisting of CaO: 30-70%, $Al_2O_3$: 70-30% and $CaC_2$: 1-25% (Japanese Patent Disclosure No. 9-165615). $CaC_2$ takes the role of a deoxidizing agent. This flux is used in such the manner that, after covering the surface of the molten steel with slag, the flux is charged into the refining vessel at the same time of blowing oxidizing gas to the surface of the covering slag. In an alternative embodiment, Al of 2-20% is added to the denitrification flux to enhance the deoxidizing effect.

SUMMARY OF THE INVENTION

The object of the present invention is to provide a steelmaking flux which enables, by choosing suitable components of the flux for refining, production of extremely pure steel containing very little amounts of oxygen, nitrogen and sulfur without using $CaF_2$. To provide the process for producing the extremely pure steel is also the object of the invention.

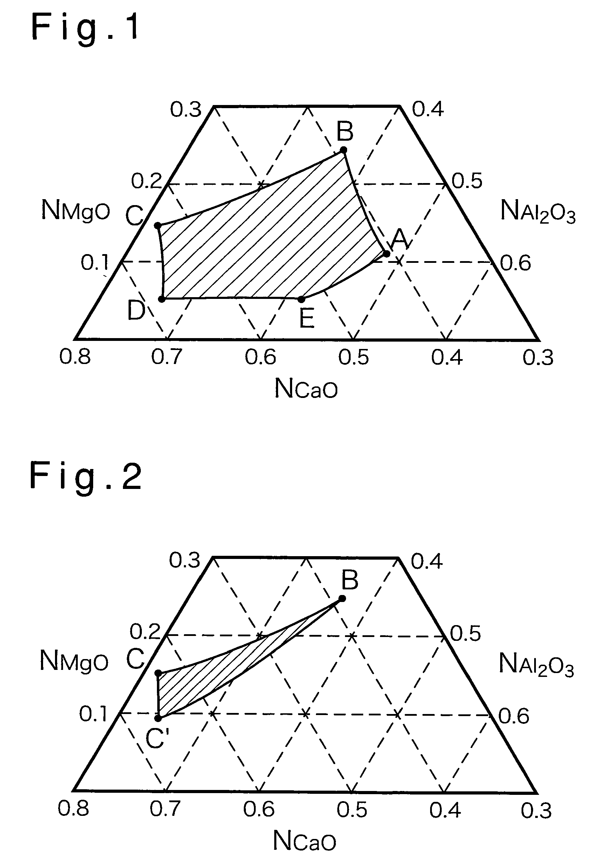

The flux according to the present invention is the flux for producing low-nitrogen, low-oxygen and low-sulfur steel consisting of, by weight, CaO: 30-57%, $Al_2O_3$: 35-64% and MgO: 5-17%, and having a composition in the region defined by the points A to E of Table 1 below in the MgO-CaO-$Al_2O_3$ diagram of Figure 1, in which the activity of alumina is $10^{-2}$ or less.

Table 1

| Point | Concentration (Molar basis, mole) | | |
|-------|-------------|-------------|-------------|
|       | $N_{CaO}$ | $N_{Al2O3}$ | $N_{MgO}$ |
| A | 0.41 | 0.48 | 0.11 |
| B | 0.37 | 0.35 | 0.11 |
| C | 0.62 | 0.22 | 0.16 |
| D | 0.87 | 0.25 | 0.08 |
| E | 0.46 | 0.45 | 0.09 |

BRIEF EXPLANATION OF THE DRAWINGS

Fig. 1 is a MgO-CaO-$Al_2O_3$ diagram showing the range of the composition of the flux for refining according to the present invention;
Fig. 2 is a MgO-CaO-$Al_2O_3$ diagram showing the range of the preferable composition of the flux for refining according to the present invention;
Fig. 3 is a graph made by inserting iso-activity lines of alumina (1873K) into the MgO-CaO-$Al_2O_3$ diagram;
Fig. 4 is a graph made by inserting iso -Cs (sulfide capacity) lines (1873K) into the MgO-CaO-$Al_2O_3$ diagram;
Fig. 5 is a graph made by inserting iso -Ls (sulfur distribution ratio) lines (1873K) into the MgO-CaO-$Al_2O_3$ diagram; and
Fig. 6 is a graph showing the results of denitrification according to the conventional technology.

DETAILED EXPLANATION OF THE PREFERRED EMBODIMENTS

In the diagram shown in Fig. 1 alumina activity is $10^{-2}$ or less in the area which is left-above of the line starting from point A extending to the left-lower part of the Figure. On the other hand, it is necessary that a refining flux should have a melting point lower than the refining temperature, approximately 1600°C. Thus, the preferable flux composition will be in the area of the pentangle formed by the lines connecting points A to E, compositions in which are defined in Table 1 above. The concentrations at the points A to E in mass basis corresponding to the molar basis concentrations shown in Table 1 are as shown in Table 2 below.

Table 2

| Point | Concentration (Mass basis, %) | | |
|---|---|---|---|
| | CaO | $Al_2O_3$ | MgO |
| A | 30 | 64 | 6 |
| B | 31 | 53 | 17 |
| C | 55 | 35 | 10 |
| D | 57 | 38 | 5 |
| E | 34 | 61 | 5 |

Fig. 2 illustrates the alumina activities in the MgO-CaO-$Al_2O_3$ system shown in Fig. 1 with iso-activity lines. As seen from this figure alumina activity is $10^{-5}$ at the line connecting point B and point C', and the area left-over to the line has flux compositions preferable for the object of the present invention. Namely, the synthetic flux having the compositions in the area shown by hatching in Fig. 2 and defined by the points B, C and D' as in Table 3, in which the alumina activity is $10^{-5}$ or less, is preferable. Particularly, the composition around the point C is the most preferable.

Table 3

| Point | Concentration (Molar basis, Mole) | | |
|---|---|---|---|
| | $N_{CaO}$ | $N_{Al2O3}$ | $N_{MgO}$ |
| B | 0.37 | 0.35 | 0.28 |
| C | 0.62 | 0.22 | 0.16 |
| C' | 0.66 | 0.25 | 0.09 |

The compositions at the points in mass basis are shown in Table 4 below:

Table 4

| Point | Concentration (Mass basis, %) | | |
|---|---|---|---|
| | CaO | $Al_2O_3$ | MgO |
| B | 31 | 53 | 17 |
| C | 55 | 35 | 10 |
| C' | 5 6 | 39 | 5 |

The following outlines the theory concerning steel refining for the purpose of explaining how the extremely pure steel can be obtained when the flux according to the invention is used.

First, in case where it is a requisite that aluminum is used as a deoxidizer, the deoxidation reaction is expressed by formula (1) below:

$$2[Al]+3[O]=Al_2O_3(s) \qquad (1)$$

and the equilibrium constant K is expressed by formula (2) below:

$$K=[\%Al]^2+[\%O]^3/aAl_2O_3 \qquad (2)$$

$$Log\ K=-45,300/T+11.62(=2.72x10^{-13}\ 1873K) \qquad (3)$$

According to Ito et al., the empirical formula is expressed by formula (3) (Ito et al., Tetsu to Hagane (Iron and Steel), vol.83, 1997, p.773) Here, "$aAl_2O_3$" is the activity of alumina. In the following fomula, indications in brackets such as "[Al]" mean the components in the molted steel, and in parenthesis such as "$(S^{2-})$" mean the components in the flux.

The following relation (4) is given by the formulae (2) and (3):

$$[\%Al]^2 \cdot [\%O]^3=2.72x10^{-13}\ x\ aAl_2O_3 \qquad (4)$$

and it is understood that, for the purpose of enhancing deoxidation by alumina, it is necessary to make the activity of alumina as low as possible

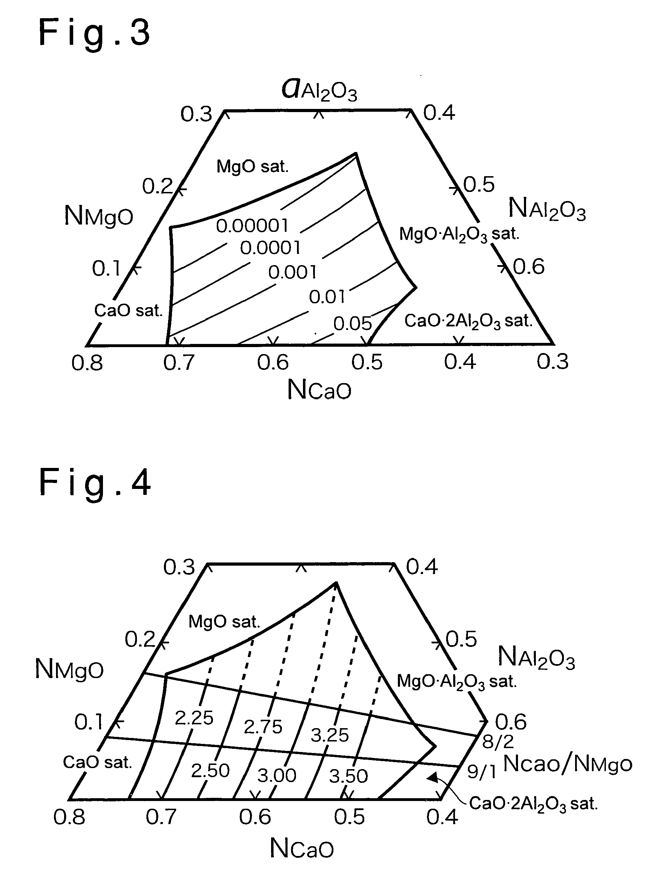

Fig. 3 shows the results of determining the activity of alumina, $aAl_2O_3$, in $MgO$-$CaO$-$Al_2O_3$ system carried out by Ban'ya et al. (S. Ban'ya, UHPM-94, p.390). The graph illustrates the iso-activity lines of alumina in the molten slag zone at 1873K. According to the data $aAl_2O_3$ becomes the minimum value around the MgO-CaO saturation zone. Even in the zone where the alumina activity is less than $10^{-2}$, around the $MgO$-$Al_2O_3$ saturation zone it is possible that spinel type non-metallic inclusion ($MgO \cdot Al_2O_3$) is formed. Therefore, it is preferable to choose a flux composition around the MgO-CaO saturation zone.

By substituting the value of $aAl_2O_3$ around MgO-CaO saturation, $10^{-6}$, in formula (4) the formula will be, at 1873K $[\%Al]^2x[\%O]^3=2.7x10^{-19}$, and supposing $[\%Al]=0.01$, it is assumed that $[\%O]<5ppm$ may be easily achieved.

It has been ascertained that the above-described tendency is observed also in the temperature range of plus and minus 50 degrees of 1873K, i.e., from 1823K to 1923K, it is concluded that, by using a flux of $MgO$-$CaO$-$Al_2O_3$ system having the composition near the MgO-CaO saturation, a low-oxygen steel can be produced at a wide range of refining temperature.

Sulfide capacity [Cs], which is a measure of desulfurizability of the molten steel is defined as formula (6) based on formula (5). If this value is large, then the desulfurization ability of the flux will be high.

$$(S^{2-})+(1/2)O_2=(O^{2-})+(1/2)S_2 \qquad (5)$$

$$Cs = (\%S)(PO_2/PS_2)^{1/2} \quad \text{definition} \quad (6)$$

Logarithm of the formula (6) will be formula (7).

$$\text{Log } Cs = \log(\%S) + (1/2)\log PO_2 - (1/2)\log PS_2 \quad (7)$$

Partial pressures of oxygen gas and sulfur gas which are in equilibrium with oxygen and sulfur in the molten steel are expressed by formulae (8) and (9):

$$[O] = (1/2)O_2(g): \log PO_2^{1/2}/aO(\%) = -5,835/T - 0.354 \quad (8)$$

$$[S] = (1/2)S_2(g): \log PS_2^{1/2}/aS(\%) = -6,535/T - 0.964 \quad (9)$$

On the basis of formulae (8) and (9) sulfur distribution ratio, [Ls], which is an index showing the relation between the sulfur in the molten steel and the sulfur in the slag, will be expressed by formula (10):

$$\text{Log } Ls = \log \{[\%S]/[\%S]\} = \log Cs - \log a_s(\%) - 700/T + 1.318 \quad (10)$$

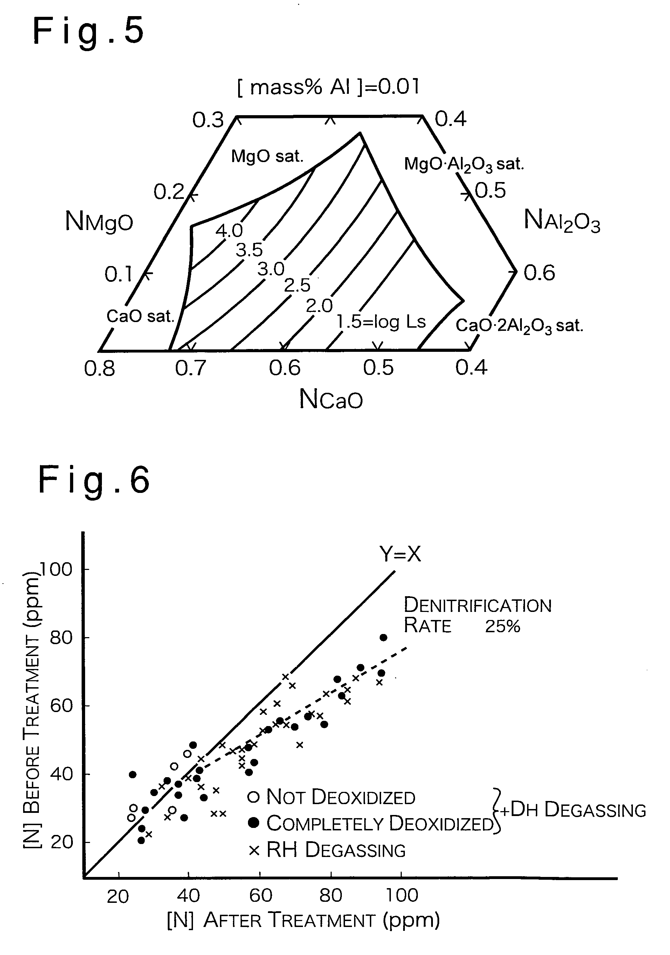

The Cs and the Ls in the MgO-CaO-Al$_2$O$_3$ system have been determined also by Ban'ya and Hino (S. Ban'ya et al., UHPM-94, p86). Fig. 4 illustrates iso-Cs lines of MgO-CaO-Al$_2$O$_3$ system at 1873K. According to this, like the deoxidation equilibrium mentioned above, the value of Cs will be maximum around the MgO-CaO saturation zone. Fig. 5 illustrates values of the Ls. It is understood from Fig. 4 that the distribution ratio or log Ls will be 4.5, which is near the maximum, at 1873K under the condition of [%Al]=0.01.

Thus, it is concluded that, under the condition that, the large the value of Cs and the smaller the [%O], the further the desulfurization proceeds, and that, in a slag of the MgO-CaO-Al$_2$O$_3$ system, around the MgO-CaO saturation zone, sulfur in the slag is in such a large amount as 30,000 times over the sulfur in the molten steel. This type of the refining condition could not be expected on the basis of the conventional knowledge in the steel refining. By carrying out refining at 1873K using a flux of the MgO-Cao-Al$_2$O$_3$ system and under the condition that [%Al]=0.01, the level of [%S]<5ppm can be easily achieved.

Denitrification of molten steel has been studied by Ban'ya and others in detail, and formula (11) was proposed: (S. Ban'ya et al., Met. Trans. B. 19B, p.233 (1988))

$$-d[\%N]/dt = (A/V)K_{N'} \cdot [\%N]^2 \quad (11)$$

K$_{N'}$ is expressed by formula (12):

$$K_{N'} = 3.15fN^2\{1/(1+300a_o+130a_s)\} \quad (12)$$

Here, V: volume of the molten steel (cm$^3$)

A: area of the gas-metal interface (cm$^2$)

f: activity coefficient of N in the molten steel (influenced by the alloying elements)

a$_o$,a$_s$: activities of oxygen and sulfur in the molten steel (influenced by the surface active elements)

As see in formulae (11) and (12) existence of oxygen and sulfur in the molten steel lowers the reaction rate of the denitrification and prevents progress of the denitrification reaction to the desired level in a limited period of time. The reason why the denitrification has been difficult in the conventional technology was insufficient removal of oxygen and sulfur in the molten steel. As the results of decreased contents of oxygen and sulfur according to the present invention the obstacle to the denitrification is removed, and lower content of nitrogen may be possible to achieve.

Fig. 6 compares the nitrogen contents in the molten steel before and after the vacuum degassing, which have been realized in the conventional technology (Japan Iron and Steel Association ed. "Handbook of Iron and Steel II, Production of Pig Iron/Steel", p.675, 1981). According to the graph the rate of denitrification achievable by vacuum degassing such as DH-degassing and RH-degassing is 25% at highest, and the content of nitrogen after the degassing is limited to 20ppm at lowest. The present invention broke through this limitation.

The flux for refining according to the invention may be conveniently used if it is prepared in certain compositions and processed into pellets or briquettes of sizes of 5-20mm.

At refining of steel using the flux according to the invention aluminum is used as the deoxidizing agent and $Al_2O_3$ resulting from the aluminum goes into the flux, and therefore, it is inevitable that the flux composition may change during the refining. Though the amount of the occurring alumina is not so large, and therefore it may often be neglected, it is preferable that the refining is carried out with consideration of such initial formulation of the flux materials may give desired composition of the flux at the later period of refining taking into account anticipated increase of $Al_2O_3$ resulting from oxidation of Al in the refining flux.

The refining of steel using the flux according to the invention can be practiced both in converters and electric furnaces including ladle furnaces (LF). The latter period of the refining may be carried out under reducing conditions with blowing of Ar gas from the bottom of the vessel. Thus, the refining can be combined with VOD-process for production of stainless steel. Needless to say, the refining can be applied to top-blowing converter operation.

Specifically in regard to the denitrification of steel, it is preferable to combine the refining using the flux of the invention with conventional degassing technologies. Known degassing technologies are, in addition to DH-process and RH-process mentioned above, LVD-process and REDA-process may be combined with the present refining. These degassing processes need treatment for a long period of time, and therefore, temperature of the molted steel may decrease during the refining. To cope with this problem ASEA-SKF process, VAD-process or refining in LF under vacuum or Ar-bubbling are recommended.

The refining of steel using the present flux makes it possible to produce steel containing impurities in the amounts remarkably smaller than the limits achieved in the conventional steelmaking technologies. In an electric furnace steelmaking with a flux containing no fluoride, the limits in the conventional technologies were 10-15ppm as to oxygen and 100ppm as to sulfur, which are broken through by the present invention. More specifically, it is possible to realize such low contents of oxygen of 5ppm or less and sulfur of 60ppm or less. Nitrogen content is usually 60-80ppm, which may be further reduced by combination with vacuum degassing to 40ppm or less, and under preferable operating conditions, 20ppm or less. Thus, using a flux containing no fluorides, pure steel containing impurities of the amount less than conventional steel can be produced.

The present flux, due to MgO component therein, contributes to prevention of damage of MgO-based refractory. Since no fluoride such as $CaF_2$ is contained, at disposal or reuse of the used flux, different from the conventional flux containing a fluoride, it is not necessary to take a measure to leaching out of fluorine compound and the used flux can be directly used as a roadbed material or a soil-improving agent.

EXAMPLE

Scrap iron was melted in an electric furnace of capacity 130 tons. The molten iron was poured into an LF (ladle furnace) and refined at a temperature of 1600°C or higher for 40-60 minutes to give composition of a steel for machine structural use. Then, the molten steel was degassed in an RH-degassing equipment over 30 minutes. Fluxes of various compositions according to the present invention were prepared by formulating [quick lime + dolomite+ aluminum ash briquettes (almond- shaped)] and used for the LF refining. Addition amount of the fluxes was 1.6 ton per 130 ton of the molten steel.

At the end of the refining the amounts of sulfur in the molten steels and in the fluxes were measured, and "Sulfur Distribution Ratio" which is defined as the ratio of sulfur content in the flux to that in the molten steel, (S)/[S], was calculated. Also, the change in the oxygen amount during the LF refining as well as decrease in nitrogen content by RH degassing were determined. For comparison, refining using a conventional flux containing calcium fluoride, or fluorite, was carried out. The results are shown in Table 3 together with the flux compositions and refining conditions.

In the cases using the fresh flux according to the invention, the Sulfur Distribution Ratios, (S)/[S], are stably of a value near 400. Even in the cases of using the conventional flux, approximately the same values were obtained. This is, however, because the fluxes used contained fluorite as a component. It was experienced that, if a flux containing no fluorite was used, it was difficult to achieve such stable values.

**Claims**

1.  A synthetic flux for producing a steel of extremely low contents of nitrogen, oxygen and sulfur, which consists of, by weight, CaO: 30-57%, $Al_2O_3$: 35-64% and MgO: 5-17%, and having a composition in the area of a pentangle defined by the points A to E of Table 1 below in the $MgO-CaO-Al_2O_3$ diagram of Figure 1, in which the activity of alumina is $10^{-2}$ or less.

Table 1

| Point | Concentration (Molar basis, mole) | | |
|---|---|---|---|
| | $N_{CaO}$ | $N_{Al2O3}$ | $N_{MgO}$ |
| A | 0.41 | 0.48 | 0.11 |
| B | 0.37 | 0.35 | 0.11 |
| C | 0.62 | 0.22 | 0.16 |
| D | 0.87 | 0.25 | 0.08 |
| E | 0.46 | 0.45 | 0.09 |

2.  The synthetic flux according to claim 1, wherein the flux is of the composition in the triangle area defined by the points B, C and C' of Table 2 below in the $MgO-CaO-Al_2O_3$ diagram of Figure 2, in which the activity of alumina is $10^{-5}$ or less.

Table 3

| Point | Concentration (Molar basis, Mole) | | |
|---|---|---|---|
| | $N_{CaO}$ | $N_{Al2O3}$ | $N_{Mg}O$ |
| B | 0.37 | 0.35 | 0.28 |
| C | 0.62 | 0.22 | 0.16 |
| C' | 0.66 | 0.25 | 0.09 |

3.  The synthetic flux made by formulating MgO, CaO and $Al_2O_3$ components in the composition defined in one of claims 1 and 2, and granulated into pellets or briquettes of 5-20mm large.

4.  A process for producing a steel of extremely low nitrogen, oxygen and sulfur by refining steel with a flux, wherein Al is used as a deoxidizing agent and the flux is prepared by formulating the initial composition in such a manner that the flux composition defined in claims 1 or 2 may be realized at least at the latter period of the refining, taking into account increase of the amount of $Al_2O_3$ during refining.

5.  The process for producing the steel according to claim 4, wherein the flux defined by one of claims 1 and 2 is used in combination with vacuum degassing.

# Fig.1

# Fig.2

# Fig.3

# Fig.4

# Fig.5

[ mass% Al ]=0.01

NMgO

NAl₂O₃

NCaO

# Fig.6

Y=X

DENITRIFICATION
RATE     25%

o NOT DEOXIDIZED
● COMPLETELY DEOXIDIZED }+DH DEGASSING
× RH DEGASSING

[N] BEFORE TREATMENT (ppm)

[N] AFTER TREATMENT (ppm)

**INTERNATIONAL SEARCH REPORT**

International application No.

PCT/JP2007/074762

A. CLASSIFICATION OF SUBJECT MATTER
*C21C7/076*(2006.01)i, *B22D1/00*(2006.01)i, *C21C7/00*(2006.01)i, *C21C7/04*
(2006.01)i, *C21C7/06*(2006.01)i, *C21C7/064*(2006.01)i, *C21C7/10*(2006.01)i

According to International Patent Classification (IPC) or to both national classification and IPC

B. FIELDS SEARCHED

Minimum documentation searched (classification system followed by classification symbols)
C21C7/076, B22D1/00, C21C7/00, C21C7/04, C21C7/06, C21C7/064, C21C7/10

Documentation searched other than minimum documentation to the extent that such documents are included in the fields searched
Jitsuyo Shinan Koho        1922-1996   Jitsuyo Shinan Toroku Koho   1996-2008
Kokai Jitsuyo Shinan Koho  1971-2008   Toroku Jitsuyo Shinan Koho   1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 48-25858 B1 (S.A. des Minerais),<br>01 August, 1973 (01.08.73),<br>Claims<br>& DE 2000735 A1 | 1-5 |
| A | JP 8-143940 A (Sumitomo Metal Industries, Ltd.),<br>04 June, 1996 (04.06.96),<br>Par. Nos. [0066] to [0071]<br>(Family: none) | 1-5 |
| A | JP 2000-129336 A (Kawasaki Steel Corp.),<br>09 May, 2000 (09.05.00),<br>Par. Nos. [0009] to [0011]<br>(Family: none) | 1-5 |

| ☒ Further documents are listed in the continuation of Box C. | ☐ See patent family annex. |

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>    13 March, 2008 (13.03.08) | Date of mailing of the international search report<br>    25 March, 2008 (25.03.08) |
| Name and mailing address of the ISA/<br>    Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2007/074762 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 60-133956 A  (Toshin Seiko Kabushiki Kaisha), 17 July, 1985 (17.07.85), Page 4, upper right column, line 20 to lower right column, line 7 (Family: none) | 1-5 |
| A | JP 2005-179762 A  (Kobe Steel, Ltd.), 07 July, 2005 (07.07.05), Par. No. [0033] (Family: none) | 1-5 |
| A | JP 2004-204307 A  (Nippon Steel Corp.), 22 July, 2004 (22.07.04), Par. Nos. [0023] to [0028] (Family: none) | 1-5 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60036610 A
- JP 2003268429 A
- JP 9165615 A

**Non-patent literature cited in the description**

- **ITO et al.** *Tetsu to Hagane,* 1997, vol. 83, 773
- **S. BAN'YA.** *UHPM-94,* 390
- **S. BAN'YA et al.** *Met. Trans. B.,* 1988, vol. 19B, 233
- Handbook of Iron and Steel II, Production of Pig Iron/Steel. 1981, 675